# EUROPEAN PATENT APPLICATION

(11) **EP 1 434 409 A1**
(43) Date of publication of application: **30.06.2004**
(21) Application number: 02080485.2
(22) Date of filing: 23.12.2002
(51) Int. Cl.: H04L 29/08

(54) **Setting user preferences via a mobile terminal**

(71) Applicant: Koninklijke KPN N.V., 9726 AE Groningen (NL)
(72) Inventor: Selgert, Franklin, 2651 BL Berkel en Rodenrijs (NL)
(74) Representative: Wuyts, Koenraad Maria

(57) **Abstract**

Method, system and terminal for setting, in an information system, comprising a network (2,7) connecting user terminals (1) and servers (4,8,9), local user preferences valid for the terminal itself and non-local user preferences, valid for said one or more servers. A preferences setting file is downloaded from one of said servers to the relevant terminal, which is completed by the relevant terminal's user with the user's local and/or non-local preferences. Subsequently, the completed preferences setting file is uploaded to the relevant server (9). One or more preference groups ("moods") may be assigned to the completed local and/or non-local preferences. The user may select one occurrence out of said preference groups, resulting in retrieval in the relevant server (9), the local and/or non-local preferences assigned to the selected preference group, and activating the relevant preferences in, respectively, the terminal and/or the network and/or the server or servers where applicable.

## Description

### Field of the Invention

The invention refers to the setting of user preferences, listed in a user terminal or in an information or transmission system to which a user terminal may be connected.

### Background of the Invention

It is important to know in which "role" a (e.g. mobile) terminal user is at a certain moment and/or location: it may felt undesired if a mobile terminal receives and displays a ("pushed") advertisement about e.g. a special offer of snacks when its user attends a business meeting or has a romantic date.

In general the fact that no account can be made with the user's "mode", "mood" or "environment" is seen as an important obstruction for the success of "pushed" content delivery. At the other hand, users already become used to set their terminal to a number of "roles" etc., e.g. "meeting", "silence", "normal", "outdoors", etc. Those settings, however, are local terminal settings which do not influence the network, e.g. the reception of (unwanted) content.

### Summary of the Invention

One aspect of the present invention is to enable to set simultaneously user preferences which are valid for the terminal and/or the network and/or external servers.

Another aspect is to apply one common user interface and/or platform for the setting of user preferences, valid for the terminal and/or the network and/or external servers.

A further aspect is to load a "user preferences setting page" or the like (e.g. by means of WAP, I-mode, etc.) from an internet server, comprising input fields which can be used by the user to input the desired preferences in the telecommunications and/or data network. Via the same internet page local terminal settings may be set, e.g. using an "Application Program Interface" (API) linked to the terminal's control software.

The user may use the "user preferences setting page" for setting, resetting or amending the user's preferences, e.g. adapted to the user's "mode", "mood" or "environment". By selecting the desired right "mood", the behaviour of the terminal, viz. the terminal itself and the information to be supplied to the user, will be applied, both within the terminal and outside the terminal, viz. by the relevant server(s).

The "user preferences setting page" -which will also called "moodpage" hereinafter- thus may be used to set e.g. a "buy mode", business mode", "holidays mode", "romantic mode", etc. Each mode may comprise a group (cluster) of setting parameters, some of which relate to the terminal itself, e.g. the ringtone mode, and some of them relate to the form and/or content of information which may or may not be sent to the terminal. Also network settings (parameters) may be incorporated in said groups.

The "moodpage" preferrable has the form of a "portal", serving as a interchange page via which various other information services may be called and/or routed to deliver their content to the relevant user terminal.

### Figures

Figure 1 shows schematically the internet and a mobile telecommunication network, as well as a mobile terminal.
Figure 2 shows schematically an embodiment of a mobile terminal which is enabled to cooperate with the telecommunication network and the internet.

### Detailed Description of the Drawings

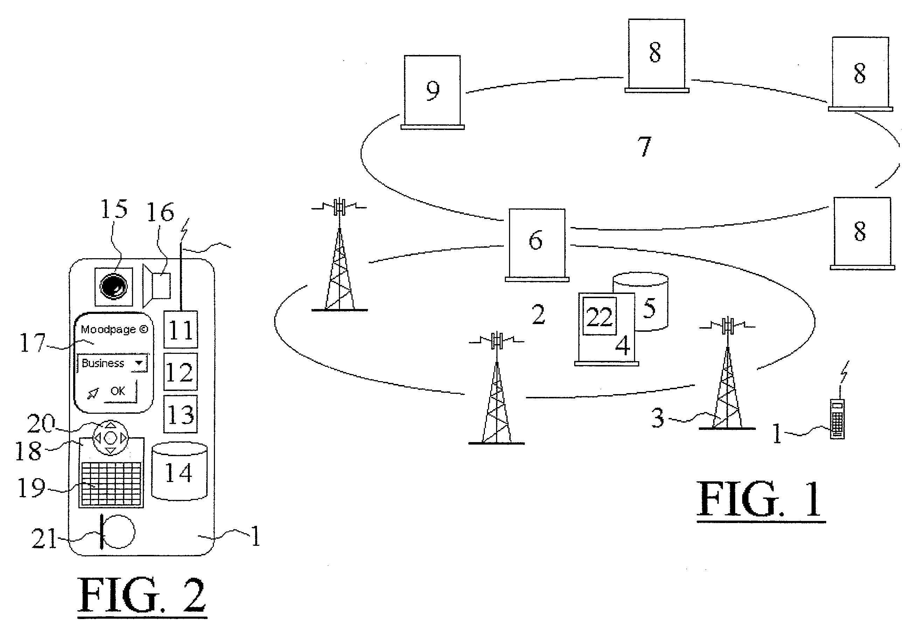

In figure 1 a terminal 1 may be connected to a telecommunication network 2, via basestations 3. The network 2 is deemed to be controlled by control means 4, including a database 5. Of course, in practice the control means 4 comprise a plurality of servers, exchanges, registers, databases etc.; the control means may be based on "Intelligent Network" (IN) technology, which is fit for lean and mean adaptation of user preferences etc., which may be registered in the relevant database(s).

By means of a telephony/internet interface server 6 -e.g. known from applicant's EP2079379-the telecommunication network 2 is linked with the internet ("world wide web") 7. Connected to the internet 7 are several servers 8 which may be enabled to deliver information in the form of graphics, text, images, sound etc. One server 9 may serve as "portal" for services to and from mobile terminals like terminal 1.

Figure 2 shows schematically the architecture of terminal 1 more in detail. Shown is an antenna 10, connected to a transceiver 11, which, in turn, is connected with a terminal controller 12. Controller 12 is connected with an API module 13, a register 14, a camera 15, a loudspeaker 16, a video display screen 17, an input module 18, comprising a keyboard 19 and a pointing device 20, and a microphone 21. For sake of clarity, the interconnections between the various modules are not shown in figure 2.

The terminal 1 may originate a call to another terminal via the network 2. Such a call may be setup by means of the keyboard 19, the controller 12, the transceiver 11, the antenna 10, one of the base stations 3 and the network control means 4, which will setup a connection to the relevant called terminal. A call from another terminal to terminal 1, will arrive at the control means 4 in the same way, after which the control means 4 will setup a connection to terminal 1 via the relevant base station 3, guided by e.g. location information of terminal 1 registered in database 5. The received call will reach controller 12 via the antenna 10 and transceiver 11, resulting in e.g. outputting a call tone via the loudspeaker 16, whereupon the terminal user may pick up the call by pushing the relevant button on the keyboard 19.

When the user e.g. is attending a meeting, the user may have set locally -e.g. via keyboard 19- the terminal's call tone into "buzz" mode, or the user, in another environment, may set a certain preferred ring tone, for instance some measures of the user's favourite piece of music. Besides to make a voice connection with another terminal, terminal 1 may be enabled to communicate with internet servers 8. To that end the terminal 1 may connect, via interface 6, the relevant portal server 9. Via portal 9 information (text, graphics, video, sound, etc.) may be dowloaded from (and/or uploaded to) one or more of the servers 8. Said information is transmitted to the terminal 1 and presented to the terminal's display 17 and/or -in the case of audible information- the loudspeaker 16.

Besides setting preferences within the terminal, as discussed before, the user may set user preferences within the telecommunication network 2, which settings may be registered in database 5, and/or user preferences in the internet domain, viz. preferences in the portal 9 and/or within (files within) one or more servers 8.

All those user preferences now may be set using one common (e.g. graphic) user interface (GUI), residing in the terminal 1, to set both the local terminal related preferences like ringtone settings etc. and external settings, registered in the telecommunication network and/or in the internet. To that end the terminal 1 comprises the API (Application Program Interface) module 13 mentioned before. In general an API is a software module comprising a language and message format used by an application program to communicate with the operating system or some other control program such as a database management system or communications protocol. API's may be implemented by writing function calls in the program, which provide the linkage to the required subroutine for execution. Thus, an API implies that some program module is available in the computer to perform the operation or that it must be linked into the existing program to perform the tasks.

Being connected to the internet portal server 9, the terminal 1 may load a common setting internet page ("preferences setting page") which may be displayed at the screen 17 and which includes fields which may be filled (completed) by the user with the user's preference parameters, clustered together to different "moods", "modes" or "environments" (hereinafter to be called "moods").

The parameters may partly be valid as local terminal settings relating to the terminal hardware and/or software to be registered in the terminal's register 14. The parameters also may partly be valid as settings for the telecommunication network 2, to be registered in dabase 5. And finally, part of the user preference setting may be valid for one or more internet servers, either having the function of portal, like server 9, or not, like the servers 8.

For instance, user preference parameters for the mood "business" could comprise e.g.
- one or more terminal parameters e.g. setting the terminal's ring tone to buzz or vibrate, to be registered into terminal register 14;
- one or more network parameters e.g. setting the network 2, to be registered into the network control database 5, e.g. setting that only one or some restricted originating callers may access the user's terminal 1, while all remaining callers are rerouted to e.g. a secretary's telephone number or to the user's voice mail box;
- one or more portal server parameters, to be registered into the portal server, e.g. setting a preference relating to the format (font, background) of internet pages to be displayed to the user via the terminal screen 17;
- one or more content provider parameters, to be registered within the portal server 9 and/or the relevant content servers 8, e.g. setting the content to be downloaded to the terminal 1, e.g. relevant stock quotes or selected business news.

All those parameters are to be input in said "preferences setting page", in this example related (and clustered) to the "business mood". The same page may comprise input fields in which preferences may completed related to other moods, like "home", "holiday", "hobby" etc. All those clustered preferences may be input by means of one "preferences setting page" common for all "moods" or via separate "preferences setting pages" per "mood", which isn't important as such.

All parameters are thus recorded via the "preferences setting page(s)" and transmitted to the portal server 9, in which the all those parameters are registered.

When the terminal user, after having transmitted his/her preferences for the various moods to the portal server 9, the user may load and activate his/her preferences by calling a "moodpage" at the portal 9 and selecting or setting his/her mood for that moment, e.g. the mood "business".

After the user selects and submits the mood "business" to the portal server 9, the portal server 9 retrieves the user's preference parameters from the relevant "preferences setting page(s)" and activates the relevant internet related parameters within the portal 9 and the relevant linked servers 8. The parameters which are valid outside the internet domain, viz. in the telecommunication network 2 and/or within the terminal 1 itself are sent back to the terminal 1 and set in its controller 12 via the API module 13, which is able to read and interpret the contents -especially the parameters- of the non-internet preferrences sent back from the portal 9, to interact with the controller 12 and to set the terminal settings like e.g. the ring tone settings etc. Besides, the API module 13 may output via controller 12 settings for the telecommunication network. Those network settings -which normally have to be set by the user by inputting such settings e.g. via the keyboard 19- will be forwarded, by the controller 12, to the network control means 4, to be registered in the relevant network database 5.

So, registering and clustering -via completing the electronic form called "preferences setting page(s)"- of various "mood" related local (terminal) and non-local (network and/or server) settings enables the terminal user to adapt his/her terminal, network and server preferences to his/her mood, mode or environment in a trice, viz. by selecting the relevant mood (cluster) and submitting it to the portal 9, which portal 9 subsequently retrieves all previously input parameters assigned to the selected mood. The parameters are used to adapt the portal's and the relevant server's settings to the user's "mood" and -after sending back the relevant parameters to the terminal 1- to set, via the terminal controller 12 the settings of the terminal 1 and/or the network 2.

It is noted that, to prevent the necessity to send back local and network parameters from the portal to the terminal and/or network, it may be advantageous to register those parameter within the terminal 1 and network 2 respectively instead of in the portal server 9. To that end the local and network parameters are read from the "preferences setting page" form(s) when they are completed by the user. When all preference parameters are filled in, the form is to be submitted to the portal 9. The API module 13 may be programmed thus that, on submission of the parameters by means of such a "preferences setting page" form, the API 13 intercepts the submitted parameters and registers locally, in register 14, the terminal and/or network parameters, labeled with (clustered to) the relevant mood item (e.g. "business"). To act in the desired way when, later on, the user decides to activate another mood, the API module 13 is programmed so that, when the user submits, by means the "moodpage" called from the portal 9 e.g. the (new) mood "business", The API 13 intercepts that new mood item (viz. "business") and retrieves locally, in the register 14, the local and network parameters assigned to the label "business". The locally registered parameters are activated by the terminal, while the internet related parameters are retrieved by portal 9 which also activates those parameters. As the terminal and network parameters already are present in the terminal 1 it will be no longer necessary to send those parameters back to the terminal.

For completeness it is noted that it might be preferred to have an (additional) API module 22 within the network control means 4, enabling the control means 4 to intercept, register and afterwards retrieve in database 5 parameters which are valid for the user related preferred network settings, related to the various user moods like "business" etc. In that case the terminal 1 could intercept, register and retrieve locally the relevant terminal parameters using register 14 and API module 13, the network control means 4 could intercept, register and retrieve the relevant network parameters using database 5 and said API module 22, while only the internet related parameters should be registered and retrieved in the portal server 9 and/or content servers 8.

It is noted that the preference setting pages or moodpages might also be called and completed by means of e.g. a data terminal connected to the internet 7, bypassing the relevant mobile terminal 1. Of course the relevant moodpages should have to be secured against unauthorised access etc. Further, some mood page parameters could relate to billing aspects, e.g. billing accounts: by selecting "business" as mood the usage of the terminal, telecommunication network 2 and/or the internet related services of the servers 8 and/or 9 could be billed using a business account, while when the user selects a private mood like "holliday" the costs for using the terminal, telecommunication network and/or internet related services could be attributed to a private user account.

## Claims

1. User terminal comprising control means (12), a user interface (17,18) and means for interaction between the terminal and one or more servers (4,8,9) via a network (2,7), the terminal comprising means (12,13), cooperating with the user interface, for substantially simultaneously setting local user preferences valid for the terminal itself and non-local user preferences, valid for said one of more servers (4,8,9).

2. User terminal according to claim 1, said means being fit for downloading and displaying a preferences setting file from one of said servers, to be completed by the user with the user's local and/or non-local preferences via said user interface, and for uploading said preferences setting file completed with said local and/or non-local preferences to the relevant server (9).

3. User terminal according to claim 2, said means being fit for assigning one or more preference groups to the completed local and/or non-local preferences.

4. User terminal according to claim 3, said means being fit for selecting, by the user, one occurrence out of said preference groups, for retrieving, in the relevant server (9), the local and/or non-local preferences assigned to the selected preference group, and for activating the relevant preferences in, respectively, the terminal and/or the network and/or the server or servers where applicable.

5. User terminal according to claim 4, comprising an Application Program Interface (13) fit for activating the preferences in the terminal.

6. User terminal according to claim 4, comprising an Application Program Interface (13) fit for remotely activating the preferences in the network (2).

7. Information system, comprising a network (2,7) connecting user terminals (1) and servers (4,8,9), one or more of said the terminals and one or more of said servers comprising means for mutual interaction via a network (2,7), as well as means for substantiallysimultaneously setting local user preferences valid for the terminal itself and non-local user preferences, valid for said one or more servers.

8. Information system according to claim 7, said means being fit for downloading a preferences setting file from one of said servers to the relevant terminal, the means, moreover, being fit for completion the preferences setting file by the user with the user's local and/or non-local preferences, and fit for uploading said preferences setting file completed with said local and/or non-local preferences to the relevant server (9).

9. Information system according to claim 8, said means being fit for assigning one or more preference groups to the completed local and/or non-local preferences.

10. Information system according to claim 9, said means being fit for selecting, by the user, one occurrence out of said preference groups, for retrieving, in the relevant server (9), the local and/or non-local preferences assigned to the selected preference group, and for activating the relevant preferences in, respectively, the terminal and/or the network and/or the server or servers where applicable.

11. Information system according to claim 10, the relevant terminal comprising an Application Program Interface (13) fit for activating the preferences in the terminal.

12. Information system according to claim 10, the relevant network comprising an Application Program Interface (22) fit for activating the preferences in the network.

13. Method for setting, in an information system, comprising a network (2,7) connecting user terminals (1) and servers (4,8,9), local user preferences valid for the relevant terminal itself and non-local user preferences, valid for said one or more servers, comprising next steps:
- downloading a preferences setting file from one of said servers to the relevant terminal,
- completion the preferences setting file by the relevant terminal's user with the user's local and/or non-local preferences, assigning one or more preference groups to the completed local and/or non-local preferences,
- uploading said preferences setting file completed with said local and/or non-local preferences to the relevant server (9),
- selecting, by the user, one occurrence out of said preference groups,
- retrieving, in the relevant server (9), the local and/or non-local preferences assigned to the selected preference group,
- activating the relevant preferences in, respectively, the terminal and/or the network and/or the server or servers where applicable.
